# EUROPÄISCHE PATENTSCHRIFT

(11) **EP 0 990 388 B1**
(45) Veröffentlichungstag und Bekanntmachung des Hinweises auf die Patenterteilung: **14.08.2002**
(21) Anmeldenummer: 98118351.0
(22) Anmeldetag: 28.09.1998
(51) Int. Cl.: A01K 97/06, B65D 81/22

(54) **Behältnis für eine Angelschnur**
Container for fishing line
Récipient pour ligne de pêche

(43) Veröffentlichungstag der Anmeldung: 05.04.2000
(73) Patentinhaber: Bloch, Klaus, D-53757 Sankt Augustin (DE)
(72) Erfinder: Bloch, Klaus, 53757 St. Augustin (DE)
(74) Vertreter: Müller-Gerbes, Margot, Dipl.-Ing.

(56) Entgegenhaltungen:
- EP-A- 0 363 194
- WO-A-98/41116
- FR-A- 779 653
- US-A- 1 488 268
- US-A- 2 050 944
- US-A- 3 801 011

## Beschreibung

Die Erfindung bezieht sich auf ein öffenbares und wieder verschließbares Behältnis aus einem feuchtigkeitsundurchlässigen Material enthaltend eine auf einer Spule aufgespulte Angelschnur auf Basis Polyamid und ein Feuchtigkeitsreservoir für die Angelschnur, wobei das Feuchtigkeitsreservoir ein Trägergebilde und eine Feuchte lieferndes Mittel enthält.

Die Erfindung bezieht sich auf das Aufbewahren von auf Spulen aufgespulten Angelschnüren auf Basis von Polyamid in einem öffenbaren und wieder verschließbaren Behältnis, wie sie von den Anglern genutzt werden, um die Rollen der Angeln stets wieder mit Angelschnur nachrüsten zu können.

Monofile Angelschnüre auf Basis Polyamid sind bekannt und finden eine breite Anwendung, da sie hohe Festigkeitswerte aufweisen, unempfindlich gegen Verschmutzungen sind und chemikalienbeständig sind. Es ist bekannt, daß Polyamide im trocknen Zustand, hart und mehr oder weniger spröde sind. Bei Wasseraufnahme aus der Atmosphäre oder bei Wasserlagerung werden sie zäher und abriebfester, der E-Modul sinkt. Man unterscheidet daher trockne Polyamide und konditionierte Polyamide, d. h. bei 23° C und 50 % relative Feuchte bis zur Sättigung gelagerte Polyamide, wobei deren Wasseraufnahme bei 23° C bis zur Sättigung erfolgt.

Am besten geeignet für den Einsatz sind monofile Angelschnüre aus konditioniertem Polyamid, die zäh und abriebfest sind und gegenüber dem gleichen nichtkonditionierten Polyamid einen verringerten E-Modul aufweisen und aus diesem Grunde beim Abspulen von einer Spule nicht mehr den für den Angler unerwünschten Drall aufweisen. Je ausgetrockneter eine Polyamid-Angelschnur ist, desto stärker bleibt die von der Spule abgezogene Angelschnur gebogen. Je optimaler die Polyamidangelschnur hingegen konditioniert ist, d. h. den optimalen Wassergehalt aufgenommen hat, desto elastischer ist sie und läßt sich problemlos von der Spule unter Glättung, d. h. Streckung der Bögen und Vermeidung des Dralls abziehen.

Es ist bekannt, die Angelschnüre in Verkaufspackungen, wie beispielsweise Blisterpackungen anzubieten oder in eingeschweißten Folienbeuteln aus Kunststoff oder Dosen. Soweit die Verpackungen Papier- oder Kartonteile enthalten, trocknen die Angelschnüre bei langer Lagerung, beispielsweise im Winter aus.

Aber auch Angelschnüre in feuchtigkeitsundurchlässigen Behältnissen, wie Metalldosen, Plastikdosen oder Kunststoffbeuteln trocknen bei längerer Lagerung aus, insbesondere dann, wenn die Behältnisse bereits in Gebrauch genommen wurden und geöffnet worden sind und dann auch nicht mehr wieder 100 %ig schließen.

Aus der FR 779653 A ist bereits ein Behältnis zur Aufbewahrung und Entnahme von Angelschnur bekannt, das ein flüssiges oder pastöses Schmiermittel wie Öle und Fette, Stearin, Wachse, Paraffine enthält, um die Angelschnur geschmeidig zu erhalten.

Des weiteren ist es bekannt, z.B. Lebensmittelverpackungen mit Flüssigkeitsreservoiren wie mit Wasser getränkten Celluloseeinlagen oder Pufferlösungen enthaltend eine gesättigte Kochsalzlösung oder mit Wasser gefüllten Microkapseln auszustatten, wie in WO 98/41116; EP 0363194 A2 oder US 3801011 beschrieben.

In der US 1488268 wird ein Behältnis vorgeschlagen, in dem die Angelschnur zwischen zwei feuchten Blättern eingelegt ist.

Der Erfindung liegt die Aufgabe zugrunde, das Aufbewahren von Angelschnüren aus Polyamid, die auf einer Spule aufgespult sind, für den Gebrauch durch den Angler so zu gestalten, daß das unerwünschte Austrocknen der Polyamidangelschnüre während längerer Lagerzeiten und auch während der Verbrauchszeit vermieden wird.

Diese Aufgabe wird durch ein Behältnis mit den Merkmalen des Patentanspruches 1 gelöst.

Als Angelschnüre werden bevorzugt, extrudierte Monofilamente aus aromatischen Polyamiden, Polyamid 6, Polyamid 66 und/oder Copolyamiden jeweils in konditionierter Form vorgesehen.

Hierbei sind Angelschnüre aus Monofilen aus Polyamid bzw. Copolyamid in konditionierter Form bevorzugt, die einen Zug-E-Modul von etwa 1 500 bis 3 000 MPa, bevorzugt 2 000 bis 3 000 MPa und eine Aufnahme von Wasser bei 23° C und Sättigung von 5 bis 10 %, bevorzugt 6 bis 8 % und Feuchteaufnahme bei 23° C und 50 % relativer Feuchte bis zur Sättigung von 1,8 bis 3,4 %, bevorzugt 1,8 bis 3 % aufweisen.

Das erfindungsgemäße Feuchtereservoir enthält bevorzugt ein Trägergebilde und ein Feuchte lieferndes Mittel.

Als Trägergebilde kommen beispielsweise textile flüssigkeitsaufnehmende Gebilde auf Basis von Natur und/oder synthetischen Fasern und/oder Filamenten zum Einsatz. Hierbei sind Filze, wie Nadelfilze bevorzugt. Jedoch können auch andere textile Flächengebilde, wie Vliese oder Gewebe oder Gewirke eingesetzt werden.

Als Feuchte lieferndes Mittel ist bevorzugt Wasser bzw. destilliertes Wasser. Da das Trägergebilde jedoch bei zu hoher Wasseraufnahme dieses nicht ausreichend hält, wird erfindungsgemäß vorgeschlagen, als Feuchte lieferndes Mittel eine Emulsion auf Basis von feinteiligem Polytetrafluorethylenpulver und insbesondere destilliertem Wasser zu verwenden. Diese sogenannte PTFE-Milch wird von einem textilen Gebilde hervorragend aufgenommen, wobei das Wasser aus der Emulsion verdunsten kann, jedoch die PTFT-Pulverteilchen in dem textilen Gebilde verbleiben. Da nur die H₂0-Komponente als Feuchte aus dem Flüssigkeitsreservoir an die Umgebung abgegeben wird, ist es überraschend auch möglich, beim Trockenwerden des Flüssigkeitsreservoirs dieses wiederum durch Wässerung in Wasser aufzufüllen.

Überraschend hat sich herausgestellt, daß ein mit einer Emulsion auf Basis von feinteiligem PTFE-Pulver getränktes textiles Gebilde besonders gute Feuchte haltende und Feuchte abgebende Eigenschaft aufweist. Insbesondere ist es möglich, durch die Emulsion die Feuchte, nämlich das Wasser länger in dem Flüssigkeitsreservoir zu halten, als Wasser allein in einem textilen Flächengebilde. Die PTFE-Emulsion verhindert das Auslaufen des Wassers aus dem Trägergebilde.

Bevorzugt wird eine Emulsion eingesetzt, in der das Gewichtsverhältnis von Polytetrafluorethylen-Pulverteilchen als Feststoffgehalt zu dem Wasser im Verhältnis von 1 : 4 bis 1 : 12, bevorzugt im Verhältnis von 1 : 6 bis 1 10 vorgesehen sind.

Die Emulsion kann darüber hinaus ionische Tenside als Stabilisator enthalten.

Erfindungsgemäß wird die Menge des Feuchte bildenden Mittels in dem Feuchtigkeitsreservoir zu bemessen, daß ein Austrocknen der in den Behältnis aufbewahrten Angelschnur verhindert wird, ausgehend von einem geschlossenen Behältnis.

Bei einer Angelschnur aus z. B. einem Copolyamid 6/6T von 100 m Länge mit einem Durchmesser im Bereich von 0,2 mm, die auf einer Spule aufgespult ist und in einem nur wenig größeren Behältnis untergebracht ist, ist ein Nadelfilzlappen einer Größe von 30 mm x 30 mm bei einer Dicke von 2 bis 3 mm, der mit einer PTFE-Milch getränkt ist, die beispielsweise eine Emulsion im Verhältnis PTFE zu destilliertem Wasser von 1 : 8 enthält, ausreichend, um das Behältnis mit einer Feuchtigkeit anzufüllen, die ein Austrocknen der Angelschnur verhindert bzw. bei Öffnen des Behältnisses nach dem Wiederverschließen wiederum ein Feuchteklima herstellt. So bleibt die Angelschnur auch bei langen Lagerzeiten außerhalb der Angelsaison elastisch und geschmeidig, so daß bei Inbenutzungnahme das Verdrallen und Ausbilden von Bögen vermieden wird.

Um ein Verlieren des Feuchtigkeitsreservoirs aus dem Behälter bei Öffnung desselben und Entnahme der Angelspule zu vermeiden, wird vorgeschlagen, das Feuchtigkeitsreservoir an der Innenseite des Behältnisses zu befestigen, beispielsweise anzukleben oder auch mechanisch zu verklemmen. Wenn über einen langen Zeitraum hinweg das Feuchtigkeitsreservoir dennoch austrocknet, so kann es schlicht durch Bewässerung wieder aufgefüllt werden, auch mit normalem Wasser, so daß es wieder funktionstüchtig ist. Hierbei erweist es sich als überraschend vorteilhaft, daß das PTFE in dem Feuchtigkeitsreservoir verbleibt und damit die erneute Wasseraufnahme und das Halten des Wassers in dem Feuchtigkeitsreservoir positiv beeinflußt und bewirkt.

Die Behältnisse werden bevorzugt aus einem transparenten thermoplastischen Kunststoff gefertigt, so daß eine innenliegende Angelspule erkennbar ist, ebenso Kennzeichnungen erkennbar sind.

Eine bevorzugte Ausbildung des Behältnisses sieht eine zweiteilige formstabile Gestalt mit einem Gehäuse und einem Deckel vor. Eine solche Dose kann auch später anderweitig verwendet werden, wenn die Angelspule leer ist.

Es ist aber auch möglich, daß Behältnis als Beutel aus einem thermoplastischen Kunststoff zu fertigen und mit einem dichtschließenden Klemmleistenverschluß auszubilden. Auch hieraus kann durch Öffnung des Verschlusses die Angelspule entnommen werden, wobei das Feuchtigkeitsreservoir in dem Beutel verbleibt und nach Wiedereinbringen der Angelspule in dem Beutel derselbe dicht verschlossen werden kann.

Die erfindungsgemäße Ausstattung des Behältnisses ermöglicht das Aufbewahren von Angelschnüren aus Polyamid unter Vermeidung der Austrocknung derselben, wobei das Feuchtigkeitsreservoir so bemessen wird, daß bei geschlossenem Behältnis die Angelschnüre aus konditioniertem Polyamid bei eingetretenem Wasserverlust durch Öffnen und Inbenutzungnahme wieder Feuchte aufnehmen bzw. die Feuchtigkeitsabgabe innerhalb des Behältnisses vermieden wird.

Die Erfindung wird nachfolgend anhand der Zeichnung beispielhaft erläutert.
Es zeigen:
- Figur 1: die Draufsicht auf ein zweiteiliges Behältnis mit Angelspule,
- Figur 2: den Querschnitt A - A nach Figur 1,
- Figur 3: die Draufsicht auf ein Feuchtigkeitsreservoir,
- Figur 4: die Draufsicht auf ein als Verpackungsbeutel ausgebildetes Behältnis.

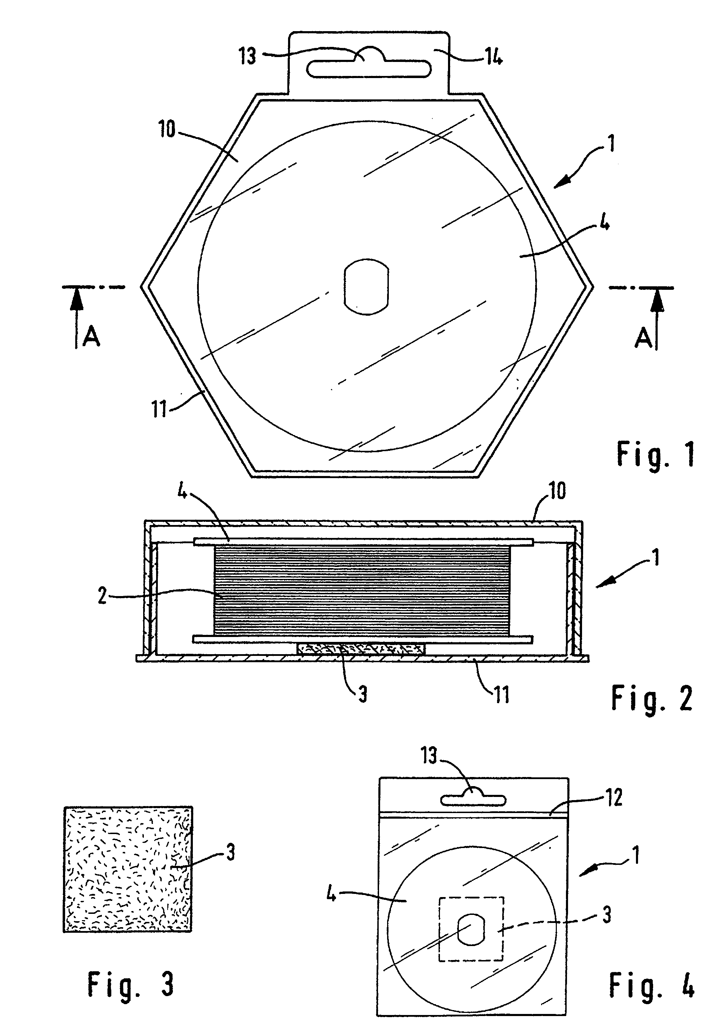

Das Behältnis 1 gemäß Figur 1 zur Aufnahme der Angelspule 4 mit aufgespulter Angelschnur 2 aus einem Polyamid ist beispielsweise in Sechseckform ausgebildet. Wie aus der Figur 2 ersichtlich, umfaßt das Behältnis 1 das Gehäuse 11, sowie den über das Gehäuse stülpbaren Deckel 10, wobei der Deckel 10 dicht und passgenau das Gehäuse 11 außenseitig übergreift. Auch andere Formen des zweiteiligen Behältnisses sind möglich. Das Behältnis 1 ist beispielsweise aus einem thermoplastischen transparenten Kunststoff durch Spritzguß gefertigt, beispielsweise aus einem Polymethylmethacrylat oder einem Polycarbonat oder einem vergleichbaren thermoplastischen Kunststoff. Die Größe des Behältnisses 1 ist so bemessen, daß die Angelspule 4 ausreichend Platz findet und leicht herausnehmbar ist.

Zur Verhinderung der Austrocknung der Angelschnur 2 aus Polyamid ist in dem Behältnis 1 neben der Angelspule ein Flüssigkeitsreservoir 3 untergebracht, beispielsweise auf dem Boden des Gehäuses 11, beispielsweise punktuell mittels eines Haftklebers verrutschfest gesichert. Das Feuchtigkeitsreservoir 3 besteht beispielsweise aus einem Nadelfilz, der mit einem Feuchte liefernden Mittel, insbesondere einer Emulsion von feinteiligem PTFE-Pulver und Wasser, bevorzugt destilliertem Wasser getränkt ist. Das Verhältnis von PTFE-Pulver zu Wasser in der Emulsion beträgt bevorzugt zwischen 1 : 6 bis 1 : 10.

In der Figur 3 ist das Feuchtigkeitsreservoir 3 in der Draufsicht dargestellt, es kann sich beispielsweise um ein Flächengebilde in quadratischer, rechteckiger, runder oder anderer Form handeln.

Eine Angelspule zur Aufnahme einer Angelschnur aus Polyamid einer Länge von 100 m mit einem Durchmesser von 0,2 mm weist in der Regel einen Durchmesser von etwa 80 mm auf und hat eine Breite von etwa 25 mm. Entsprechend ist das Behältnis 1 nur wenig größer ausgebildet. Für die Größe einer solchen Angelspule und eines Behältnisses ist beispielsweise ein Feuchtigkeitsreservoir mit den Abmessungen eines Nadelfilzes von 30 mm x 30 mm x 2,5 mm mit einer PTFE-Milch getränkt ausreichend, um die gewünschte Feuchte in dem Behältnis 1 zu erhalten, so daß die Polyamid-Angelschnur nicht austrocknet.

Das Behältnis zur Aufnahme der Angelspule 4 kann auch wie in der Figur 4 schematisch dargestellt aus einem feuchtigkeitsundurchlässigen Beutel aus einem thermoplastischen Kunststoff bestehen, der beispielsweise mittels einer Klemmleiste 12 öffenbar und wieder dicht verschließbar ist. Auch in diesem Beutel kann das Flüssigkeitsreservoir 3 in Gestalt eines mit PTFE-Milch getränkten textilen Flächengebildes eingelegt werden und gegebenenfalls auch an der Innenseite des Beutels befestigt werden.

Die Behältnisse gemäß Figur 1 und Figur 4 können des weiteren auch mit einer Möglichkeit zum Aufhängen derselben an einem Display-Ständer versehen werden. Hierbei kann der Verpackungsbeutel gemäß Figur 4 mit einem Loch 13 am oberen Rand versehen sein.

Die Dose gemäß Figur 1 und 2 hingegen kann an dem Gehäuse 11 im Bodenbereich einseitig einen vorstehenden Lappen 14 aufweisen, in dem ein Aufhängeloch 13 eingeformt ist.

## Patentansprüche

1. Öffenbares und wieder verschließbares Behältnis (1) aus einem feuchtigkeitsundurchlässigen Material enthaltend eine auf einer Spule (4) aufgespulte Angelschnur (2) auf Basis Polyamid und ein Feuchtigkeitsreservoir (3) für die Angelschnur, wobei das Feuchtigkeitsreservoir ein Trägergebilde und ein Feuchte lieferndes Mittel enthält, **dadurch gekennzeichnet, daß** als Feuchte lieferndes Mittel eine Emulsion auf Basis von feinteiligem Polytetrafluorethylen-Pulver und destilliertem Wasser verwendet ist.

2. Behältnis nach Anspruch 1, **dadurch gekennzeichnet, daß** das Polytetrafluorethylen-Pulver zu destilliertem Wasser in der Emulsion im Gewichtsverhältnis von 1 : 4 bis 1 : 12 vorgesehen ist.

3. Behältnis nach Anspruch 1 oder 2, **dadurch gekennzeichnet, daß** die Emulsion ionische Tenside als Stabilisator enthält.

4. Behältnis nach einem der Ansprüche 1 bis 3, **dadurch gekennzeichnet, daß** als Trägergebilde ein textiles Flüssigkeit aufnehmendes Gebilde auf Basis von Natur und/oder synthetischen Fasern und/oder Filamenten eingesetzt ist.

5. Behältnis nach einem der Ansprüche 1 bis 4, **dadurch gekennzeichnet, daß** als Trägergebilde ein Filz, wie Nadelfilz eingesetzt ist.

6. Behältnis nach einem der Ansprüche 1 bis 5, **dadurch gekennzeichnet, daß** die Menge des Feuchte liefernden Mittels in dem Feuchtigkeitsreservoir (3) so bemessen ist, daß ein Austrocknen der in dem Behältnis (1) aufbewahrten Angelschnur (2) verhindert wird.

7. Behältnis nach einem der Ansprüche 1 bis 6, **dadurch gekennzeichnet, daß** Angelschnüre (2) auf Basis Polyamid enthalten sind, die durch Konditionierung einen Wassergehalt von etwa 5 bis 10 %, bevorzugt 6 bis 8 % aufweisen.

8. Behältnis nach einem der Ansprüche 1 bis 7, **dadurch gekennzeichnet, daß** eine Angelschnur (2) aus einem extrudierten Monofilament aus aromatischen Polyamiden, Polyamid 6, Polyamid 66 und/oder Copolyamiden vorgesehen ist.

9. Behältnis nach einem der Ansprüche 1 bis 8, **dadurch gekennzeichnet, daß** das Feuchtigkeitsreservoir (3) mit Wasser wieder nachfüllbar ist.

10. Behältnis nach einem der Ansprüche 1 bis 9, **dadurch gekennzeichnet, daß** das Feuchtigkeitsreservoir (3) auf der Innenseite des Behältnisses befestigt ist, beispielsweise angeklebt ist.

11. Behältnis nach einem der Ansprüche 1 bis 10, **dadurch gekennzeichnet, daß** es aus einem transparenten thermoplastischen Kunststoff gefertigt ist.

12. Behältnis nach einem der Ansprüche 1 bis 11, **dadurch gekennzeichnet, daß** es formstabil zweiteilig aus thermoplastischem Kunststoff mit Gehäuse (11) und Deckel (10) ausgebildet ist.

13. Behältnis nach Anspruch 11, **dadurch gekennzeichnet, daß** es als Beutel mit einem Klemmleistenverschluß (12) ausgebildet ist.

## Claims

1. A receptacle (1) that can be opened and reclosed and consists of a material that is impervious to moisture, wherein said receptacle contains a fishing line (2) on the basis of polyamide which is wound onto a reel (4) and a moisture reservoir (3) for the fishing line, and wherein the moisture reservoir comprises a carrier structure and a medium that releases moisture, **characterized by** the fact that an emulsion on the basis of fine-particle polytetrafluor ethylene powder and distilled water is used as the medium that releases moisture.

2. The receptacle according to Claim 1, **characterized by** the fact that the weight ratio between the polytetrafluor ethylene powder and the distilled water of the emulsion lies between 1:4 and 1:12.

3. The receptacle according to Claim 1 or 2, **characterized by** the fact that the emulsion contains ionic surfactants that serve as a stabilizer.

4. The receptacle according to one of Claims 1 - 3, **characterized by** the fact that a textile structure on the basis of natural and/or synthetic fibers and/or filaments which absorbs liquids is used as the carrier structure.

5. The receptacle according to one of Claims 1 - 4, **characterized by** the fact that a felt, e.g., a needled felt, is used as the carrier structure.

6. The receptacle according to one of Claims 1 - 5, **characterized by** the fact that the quantity of the moisture-releasing medium in the moisture reservoir (3) is chosen such that the fishing line (2) stored in the receptacle (1) is prevented from drying out.

7. The receptacle according to one of Claims 1 - 6, **characterized by** the fact that it contains fishing lines (2) on the basis of polyamide which are conditioned such that they have a water content of approximately 5 - 10 %, preferably 6 - 8 %.

8. The receptacle according to one of Claims 1 - 7, **characterized by** the fact that it contains a fishing line (2) of an extruded monofilament that consists of aromatic polyamides, polyamide 6, polyamide 66 and/or copolyamides.

9. The receptacle according to one of Claims 1 - 8, **characterized by** the fact that the moisture reservoir (3) can be refilled with water.

10. The receptacle according to one of Claims 1 - 9, **characterized by** the fact that the moisture reservoir (3) is fixed, e.g., bonded, onto the inner side of the receptacle.

11. The receptacle according to one of Claims 1 - 10, **characterized by** the fact that it is manufactured from a transparent thermoplastic plastic material.

12. The receptacle according to one of Claims 1 - 11, **characterized by** the fact that it is realized in a dimensionally stable fashion and consists of two parts, namely a housing (11) and a cover (10) of a thermoplastic plastic material.

13. The receptacle according to Claim 11, **characterized by** the fact that it is realized in the form of a bag with a slide fastener (12).

## Revendications

1. Récipient (1) pouvant être ouvert et refermé à base d'un matériau imperméable à l'humidité contenant une ligne de pêche (2) enroulée sur une bobine (4) à base de polyamide et un réservoir d'humidité (3) pour la ligne de pêche, le réservoir d'humidité contenant une structure support et un moyen fournissant de l'humidité, **caractérisé en ce qu**'on utilise comme moyen fournissant de l'humidité une émulsion à base de poudre fine de polytétrafluoréthylène et d'eau distillée.

2. Récipient selon la revendication 1, **caractérisé en ce que** la poudre de polytétrafluoréthylène pour l'eau distillée dans l'émulsion est prévue dans le rapport de poids de 1/4 jusqu'à 1/12.

3. Récipient selon la revendication 1 ou 2, **caractérisé en ce que** l'émulsion contient des agents tensio-actifs ioniques comme stabilisant.

4. Récipient selon l'une quelconque des revendications 1 à 3, **caractérisé en ce qu'**une structure textile absorbant du liquide à base de fibres naturelles et/ou de fibres synthétiques et/ou de filaments est utilisée comme structure support.

5. Récipient selon l'une quelconque des revendications 1 à 4, **caractérisé en ce qu**'un feutre, par exemple du feutre aiguilleté, est utilisé comme structure support.

6. Récipient selon l'une quelconque des revendications 1 à 5, **caractérisé en ce que** la -quantité du matériau fournissant de l'humidité dans le réservoir à humidité (3) est dimensionnée de façon à empêcher un desséchage de la pêche de ligne (2) conservée dans le récipient (1).

7. Récipient selon l'une quelconque des revendications 1 à 6, **caractérisé en ce que** des lignes de pêche (2) à base de polyamide sont incluses et qu'elles présentent du fait du conditionnement une teneur en eau d'environ 5 à 10 %, de préférence 6 à 8 %.

8. Récipient selon l'une quelconque des revendications 1 à 7, **caractérisé en ce qu**'il est prévu une ligne de pêche (2) à base d'un monofilament extrudé à base de polyamides aromatiques, polyamide 6, polyamide 66 et/ou copolyamides.

9. Récipients selon l'une quelconque des revendications 1 à 8, **caractérisé en ce que** le réservoir d'humidité (3) peut être rechargé avec de l'eau.

10. Récipient selon l'une quelconque des revendications 1 à 9, **caractérisé en ce que** le réservoir d'humidité (3) est fixé, par exemple collé, sur le côté intérieur du récipient.

11. Récipient selon l'une quelconque des revendications 1 à 10 **caractérisé en ce qu'**il est fabriqué à base d'un plastique thermoplastique transparent.

12. Récipient selon l'une quelconque des revendications 1 à 11, **caractérisé en ce qu'**il est conçu en deux parties, de façon indéformable, à base de plastique thermoplastique avec un boîtier (11) et un couvercle (10).

13. Récipient selon la revendication 11, **caractérisé en ce qu'**il est conçu comme une boîte avec une fermeture à baguette de serrage (12).
